# EUROPEAN PATENT APPLICATION

(11) **EP 2 177 492 A1**
(43) Date of publication of application: **21.04.2010**
(21) Application number: 08018182.9
(22) Date of filing: 16.10.2008
(51) Int. Cl.: C04B 35/599, C04B 35/645, H01F 1/01

(54) **Sialon having magnetic properties and method of manufacturing the same**

(71) Applicant: Korea Institute Of Machinery & Materials, Daejeon 305-343 (KR)
(72) Inventor: Kim, Hai-Doo, Changwon Si Gyeongsangnam-Do 641-767 (KR); Park, Young-Jo, Changwon Si Gyeongsangnam-Do 641-765 (KR); Koh, Jae-Woong, Changwon Si Gyeongsangnam-Do 641-091 (KR); Karunaratne, Baththanamudiyanselage Samarakoon B., Dangolla Kandy (LK)
(74) Representative: Hollatz, Christian

(57) **Abstract**

Disclosed herein is a method of manufacturing sialon having magnetic properties, including: mixing silicon nitride, aluminum nitride, alumina and rare-earth oxide to form a mixture; and sintering the mixture in a nitrogen atmosphere, wherein the resulting sialon has a saturation magnetization value ranging from 0.15 to 0.24 emu/g. In the method, iron (Fe) is added to the mixture to form iron silicide, thus improving the magnetic properties of the sialon. The method is advantageous in that it can be applied to fields requiring electromagnetic materials such as high-speed transmission transformer cores, electromagnet cores and the like, and magnetic properties are additionally imparted to sialon having excellent structural properties, so that it is expected that it will be widely used in the future.

## Description

### BACKGROUND OF THE INVENTION

### 1. Field of the Invention

The present invention relates to sialon having magnetic properties and a method of manufacturing the same.

### 2. Description of the Related Art

Sialon is a ceramic alloy of silicon nitride and alumina, and it has two crystal structures of an α' phase and a β' phase. Further, sialon is formed by substituting a part of silicon atoms with aluminum atoms and substituting a part of nitrogen atoms with oxygen atoms in a network of a silicon nitride tetrahedron based on α-silicon nitride and β-silicon nitride.

Conventionally, since sialon has high hardness, excellent wear resistance, high-temperature strength and oxidation resistance, it is widely applied in related fields, and, particularly, is practically used in high-temperature structural members, such as extrusion dies for iron and nonferrous metals, nozzles for welding, parts for automobile engines, etc..

Recently, sialon is increasingly used as a fluorescent material in white LEDs as well as in structural materials. The use of sialon as a fluorescent material is described in Korean Patent Application Nos. 2007-7000982 and 2007-0026854. That is, generally, sialon was inclined to be applied only in related fields because its excellent mechanical properties were excessively emphasized, but currently it is increasingly applied to new fields.

Therefore, the present inventors have made many attempts to develop technologies for putting sialon to practical use in light of the fact that sialon can be used as an electromagnetic material in addition to a conventional structural material. In particular, sialon has been researched because of its magnetic properties, thus completing the present invention.

Up to date, research into finding a functional sialon, particularly, research into applying sialon to magnetic materials by doping the sialon with other elements and thus realizing magnetic properties has not been reported at all.

### SUMMARY OF THE INVENTION

Accordingly, the present invention has been made to enlarge a new technical scope of application of sialon, and an object of the present invention is to improve the mechanical and structural properties of electromagnetic materials having magnetic properties by enabling sialon to be used as the electromagnetic materials, the sialon being evaluated for use as a structural material of excellence owing to its provision of high strength and toughness.

Another object of the present invention is to enlarge the technical application scope of sialon as an electromagnetic material by adding metals, such as iron, cobalt, etc., or metal oxides thereof as well as rare-earth elements to sialon and thus improving the magnetic properties of sialon.

In order to accomplish the above objects, an aspect of the present invention is to provide a method of manufacturing sialon having magnetic properties, the method including: mixing silicon nitride, aluminum nitride, alumina and rare-earth oxide to form a mixture; and sintering the mixture in a nitrogen atmosphere, wherein the resulting sialon has a saturation magnetization ranging from 0.15 to 0.24 emu/g.

In the method, it is preferred that the sintering of the mixture be performed at a temperature of 1700 ∼ 1900°C through a gas-pressure sintering process.

Further, it is preferred that iron (Fe) oxide be added to the mixture, and that the saturation magnetization of the sialon be increased in proportion to the amount of the added iron (Fe) oxide.

Here, it is preferred that the sintering of the mixture including the iron (Fe) oxide be performed at a temperature of 1500 ∼ 1700°C through a gas-pressure sintering process.

Further, it is preferred that the mixture including the iron (Fe) oxide is sintered to form iron silicide which has magnetic properties.

Further, it is preferred that the iron silicide formed by sintering the mixture including the iron (Fe) oxide be FeSi or Fe₅Si₃.

Here, it is preferred that the rare-earth oxide be at least one selected from among yttrium (Y) oxide, ytterbium (Yb) oxide, samarium(Sm) oxide, gadolinium (Gd) oxide and erbium (Er) oxide, and the amount of the rare-earth oxide be 10 ∼ 20 wt% based on the total amount of the mixture.

Further, in order to accomplish the above objects, another aspect of the present invention is to provide sialon having magnetic properties, manufactured by adding rare-earth oxide or a rare-earth element, such that the sialon has a saturation magnetization value ranging from 0.15 to 0.24 emu/g.

Furthermore, in order to accomplish the above objects, still another aspect of the present invention is to provide sialon having magnetic properties, manufactured by adding rare-earth oxide or a rare-earth element and iron (Fe) or iron (Fe) oxide thereto, so as to increase the saturation magnetization value of the sialon depending on the amount of iron (Fe) or iron (Fe) oxide added.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a graph showing the results of X-ray diffraction (XRD) analysis of ytterbium (Yb)/α-sialon according to an embodiment of the present invention;
FIG. 2 is a graph showing a magnetic hysteresis loop of sialon doped with rare-earth elements according to an embodiment of the present invention;
FIG. 3 is a graph showing a magnetic hysteresis loop of pure oxide powder of rare-earth elements;
FIG. 4 is a graph for comparing the magnetic hysteresis behavior of sialon doped with rare-earth elements according to an embodiment of the present invention with the magnetic hysteresis behavior of ferrite (Sr11) containing strontium (Sr);
FIG. 5 is a photograph showing the reaction of an iron (Fe)-containing sialon sample and a permanent magnet according to an embodiment of the present invention;
FIG. 6 is a graph showing magnetic hysteresis behavior of sialon containing various rare-earth elements after the addition of 10 wt% of iron (Fe) to the sialon according to an embodiment of the present invention;
FIG. 7 is a graph showing the change in magnetic critical value of sialon doubly-doped by changing the amount of iron (Fe) according to an embodiment of the present invention;
FIG. 8 is a photograph showing a microstructure of iron silicide particles in the sialon manufactured and X-ray diffraction (XRD) analysis graph according to an embodiment of the present invention;
FIG. 9 is a photograph showing a microstructure of sialon doped with ytterbium after the addition of 10 wt% of iron (Fe) to the sialon according to an embodiment of the present invention; and
FIG. 10 is a graph showing the results of X-ray diffraction (XRD) analysis of sialon doped with ytterbium after the addition of 10 wt% of iron (Fe) to the sialon according to an embodiment of the present invention.

### DESCRIPTION OF THE PREFERRED EMBODIMENTS

Hereinafter, preferred embodiments of the present invention will be described in detail with reference to the attached drawings.

The present invention is related to the magnetic behavior of sialon doped with various rare-earth elements. In particular, the present invention provides sialon which is doped with yttrium (Y), ytterbium (Yb), samarium (Sm), gadolinium (Gd), erbium (Er), iron (Fe) and cobalt (Co) and is sintered through a gas-pressure sintering process. However, the gas-pressure sintering process is only an embodiment of the present invention, and thus it is obvious that other sintering processes other than the gas-pressure sintering process can also be used.

The composition and ratio of α-phase (α-sialon) and βphase (β-sialon) of the final sialon product manufactured by the above sialon manufacturing process can be clearly evaluated using various analyses, such as X-ray diffraction (XRD) analysis, scanning electron microscope (SEM) analysis and the like.

The magnetic hysteresis loop data of sialon samples can be obtained by measuring the magnetic hysteresis of the sialon samples using a vibration sample magnetometer at room temperature. As a result, it can be seen that the magnetic hysteresis of doped sialon, particularly α-sialon, very clearly appeared as expected. Although parameters corresponding to the magnetic hystereis loop of the doped sialon are not larger than those corresponding to the magnetic hysteresis loop of ferrite, since the doped sialon has excellent structural properties and also magnetic properties, it is very possible to use the doped sialon having structural properties and magnetic properties as electromagnetic materials in new applications of wide scope.

Further, it is observed that the magnetic hysteresis behavior of doped β-sialon is similar to that of the doped α-sialon. Moreover, in order to improve the magnetic properties of the sialon of the present invention, iron (Fe) and cobalt (Co) are introduced into a sialon system. It can be seen that the magnetic properties of the sialon containing iron are remarkably improved.

Sialon is evaluated as a leading material having excellent mechanical properties, chemical stability and wear resistance in engineering fields. A material, which is a solid solution of silicon nitride, in which silicon (Si) atoms and nitrogen (N) atoms are partially replaced with respective aluminum (Al) atoms and oxygen (O) atoms, is referred to as β-sialon (β'), and the β-sialon is represented by Formula: Si_{6-z}Al_{z}O_{z}N_{8-z}. In the Formula, z is introduced to define the quantitative concept that aluminum (Al) can be replaced with silicon (Si), oxygen (O) or nitrogen (N), and is in a range of 0<z<4.2, α-silicon nitride forms a limited solid solution, compared to β-silicon nitride, and this limited solid solution is referred to as α-sialon(α'). The substitution structure of α-sialon is similar to that of β-sialon, but, in order to increase the stability of α-sialon, metal cations (M = calcium, etc.) are added to the α-sialon. These metal cations are partially located in two gigantic interstitial lattice spaces of a unit cell of α-silicon nitride. Further, these metal cations must have a size of such a degree that they can occupy interstitial volume, and must have a radius of about 1Å or less.

Generally, α-sialon is represented by Formula: M^{v+}_{m/v}Si₁₂₋₍ₘ₊ₙ₎Alₘ₊ₙOₙN₁₆₋ₙ. In the Formula, v is an atomic valence of the metal cation (M).

The α-sialon and β-sialon of the present invention are compacted through a transient liquid-phase sintering process. Metal oxide is used as an additive serving as a base material for forming liquid phase oxynitride. Since sialon has excellent structural properties, sialon having magnetic properties can play an important part in the application of materials in material engineering.

In order to observe the magnetic behavior of sialon, sialon samples doped with various rare-earth elements were reacted with a permanent magnet, and, as a result, magnetic properties of the sialon samples were somewhat observed. Therefore, in the present invention, the manufacture process and magnetic behavior of a series of sialon doped with various dopants such as yttrium (Y), ytterbium (Yb), samarium (Sm), gadolinium (Gd), erbium (Er), iron (Fe) and cobalt (Co) will be described. As such, through research on magnetic behavior of sialon, useful information related to a role of a dopant in matrix material can be acquired, and thus the characteristics of magnetic interaction between the sialon and dopant can be understood.

### <Experimental Example>

As starting materials for manufacturing sialon according to the present invention, α-silicon nitride (UBE grade SN E10), aluminum nitride (AIN, Starck HC, Grade B), alumina (Sumitomo, AKP-30), rare-earth oxide(99.9% purity, Sigma-Aldrich Korea), and iron(III) and cobalt(II,III) oxides (99.9% purity, Sigma-Aldrich Korea) were used. Here, the rare-earth, iron and cobalt oxides may also be used in the form of simple substances rather than oxides.

Suitable amounts of the starting materials having various compositions (in the above-mentioned Formula of α-sialon, m = 1.5, n = 1.5 & m = 2, and n = 2) were mixed with each other in a rotator using ethanol as a medium and using silicon nitride balls. The compositions each correspond to 10 ∼ 20 wt%, which is a ratio of weight of dopant depending on atomic weight of rare-earth oxide to the total weight of the starting materials. In order to introduce a large amount of rare-earth cations into sialon, a suitable m value and an n value corresponding to the m value were selected.

The weight of the starting materials was 30 g, and the starting materials were mixed with each other for about 60 hours to form a wet powder. Subsequently, the wet powder was sieve-analyzed using a sieve having a size of 38 µm, and then dried to form dry powder.

Subsequently, the dry powder was hydroformed at a pressure of 200 MPa into disk-shaped pellets having a diameter of 16 mm and a thickness of 3.5 mm and cylindrical pellets having a diameter of 6 mm and a height of 5 mm. Here, the disk-shape pellets were formed to analyze sialon, and the cylindrical pellets were formed to examine the magnetic properties of sialon.

Subsequently, the pellets containing rare-earth cations were sintered using a nitrogen gas pressure of 0.9MPa at a temperature of 1800°C for 3 hours to obtain disk samples. Here, the sintering temperature can be adjusted in the range of 1700 ∼ 1900°C. Further, iron (III) and cobalt (II&III) oxides were also sintered at a temperature of 1600 °C under the same conditions as above. The reason why the sintering temperature of iron (III) and cobalt (II&III) oxides was lower than that of the pellets is that the melting point thereof is approximately 1600°C. Here, the sintering temperature can be adjusted in the range of 1500 ∼ 1700°C. In all cases, the heating rate is 10°C/min.

The obtained disk samples were analyzed using X-ray (Rigaku D/Max 2200, Japan) on the target of Cu-Kα.

Meanwhile, in order to observe the microstructures of the disk samples using a scanning electron microscope (SEM), the disk samples were polished using diamond paste. Subsequently, the polished disk samples were coated with gold (Au), and then the microstructures thereof were observed using a scanning electron microscope provided with an energy dispersive X-ray (EDS) analyzer.

Further, the density of the disk samples was determined using Archimedes' principle.

Further, the magnetic hysteresis loop data of doped sialon samples were collected using a vibration sample magnetometer (7400 series, LakeShore) at room temperature. In the present invention, the magnetic properties of sialon can be measured using a function of a magnetic field, temperature and frequency. Here, the change of magnetic flux generated by placing sialon samples in a sensing coil and then mechanically vibrating the sialon samples induces a voltage on the sensing coil, and this voltage is proportionate to the magnetic moment of the sialon samples.

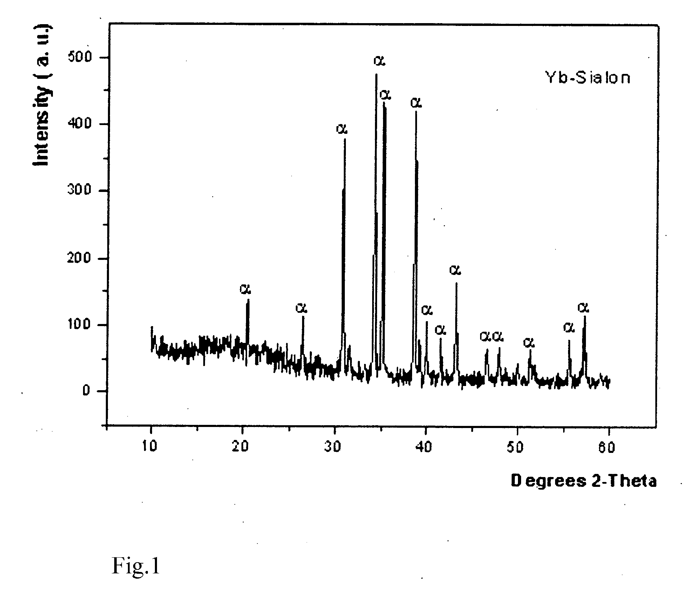

The sintered sialon samples exhibited high density. The density of the sialon samples was about 3200kg/m³ depending on the kind of dopant. FIG. 1 shows the results of X-ray diffraction (XRD) analysis of sialon doped with rare-earth elements. From FIG. 1, it was found that main crystal phase is α' and that the above analysis results can be obtained even by observing the microstructure of the sialon using a scanning electron microscope.

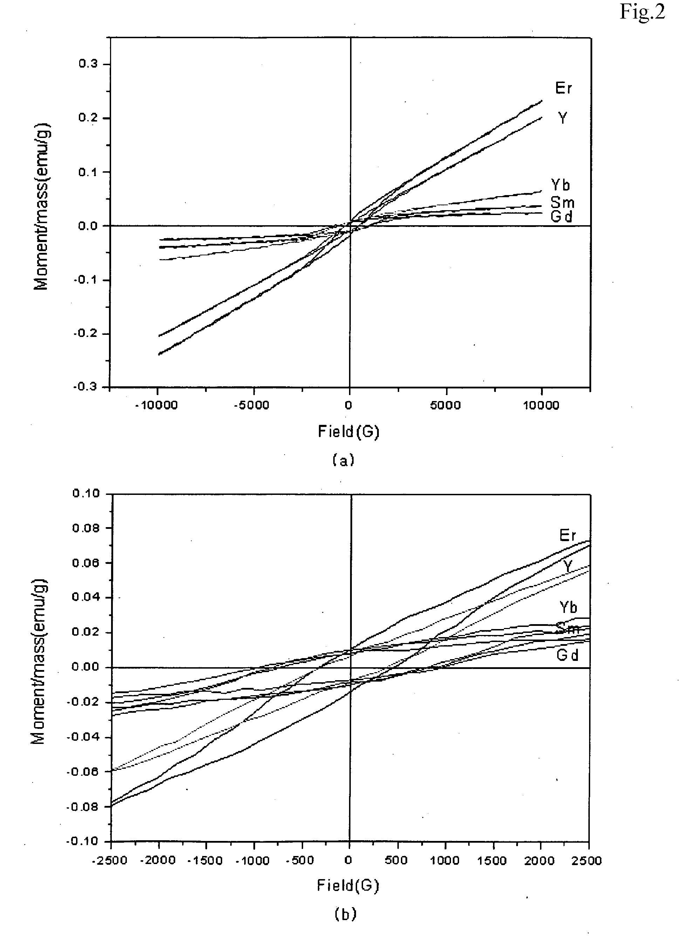

As the result of testing sialon samples doped with various rare-earth elements (at least one selected from among yttrium (Y), ytterbium (Yb), samarium (Sm), gadolinium (Gd) and erbium (Er)) using a vibration sample magnetometer (VSM), it can be seen that magnetic hysteresis loops appear. Meanwhile, as the result of observing the magnetic hysteresis behaviors of the doped sialon powder samples, they are not greatly changed. FIG. 2 shows typical magnetic hysteresis loops of sialon doped with rare-earth elements. These hysteresis loops are observed in the case of different kinds of ceramics containing different rare-earth cations. The behavior of materials related to the magnetic hysteresis loop is attributable to the reaction of orbital electrons when the materials are exposed to the applied magnetic field. The rare-earth atoms or ions can have a pure magnetic moment due to unpaired electrons being partially charged in atomic orbitals.

From FIG. 2, it can be seen that the gradients of magnetic moment curves of sialons containing various rare-earth elements to a magnetic field change. As shown in FIG. 2, the sialons containing various rare-earth elements have different magnetic susceptibility from each other. The magnetic susceptibility of sialons, which is calculated from the gradients of magnetic moment curves, can be compared with the magnetic susceptibility of rare-earth elements. However, it is very important to recognize the fact that the rare-earth atoms in a sialon structure are bonded with neighboring atoms. For example, yttrium α-sialon includes trivalent yttrium cations (Y³⁺) which are spaced apart from each other and are surrounded by seven nitrogen and oxygen atoms. From this fact, the structure of the yttrium α-sialon can be defined.

FIG. 2 shows (a) hysteresis loop and (b) the central portion thereof. As shown in FIG. 2, the saturation magnetization value of sialon was changed from 0.16 emu/g to 0.24 emu/g, the coercive field strength of sialon was changed from 400G to 900G, and the remnant magnetization value of sialon was in the range of 0.01∼0.02 emu/g. β-sialon containing rare-earth elements also shows a magnetic hysteresis similar to that of α-sialon.

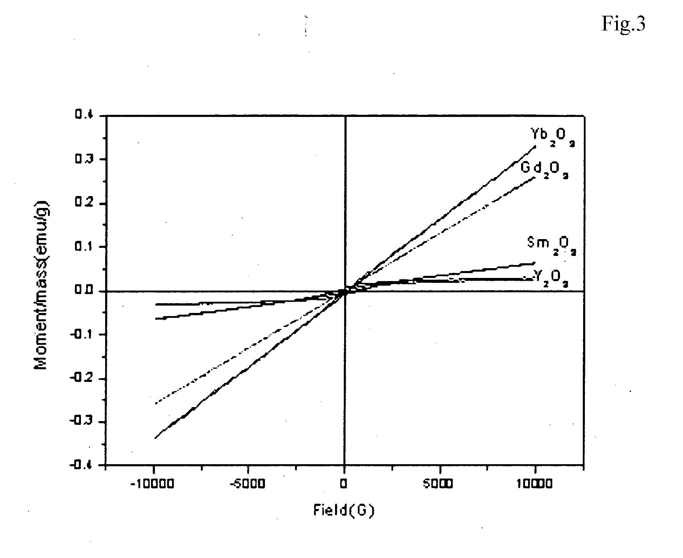

The hysteresis behavior of the doped sialon sample can be compared with that of a powdered pure rare-earth oxide sample, and FIG. 3 shows a hysteresis behavior of the powdered pure rare-earth oxide sample. As shown in FIG. 3, since the doped sialon sample and the powdered pure rare-earth oxide sample similarly respond to an external magnetic field and exhibit a small area hysteresis loop, it can be seen that they are soft magnetic materials. However, the reason why the gradient of the magnetic moment curve of the sialon doped with a specific rare-earth element is different from that of the powdered pure rare-earth oxide sample is that the magnetic susceptibility of the sialon doped with the specific rare-earth element is different from that of the powdered pure rare-earth oxide sample (refer to FIGS. 2 and 3). As described above, the reason for this is that rare-earth atoms are bonded with oxygen in the oxide and are bonded with the neighboring atoms in the sialon structure.

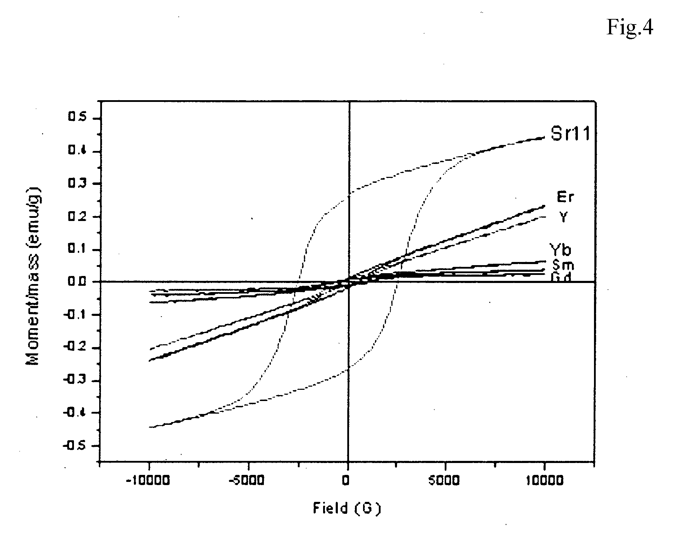

Generally, the values related to the magnetic hysteresis of the sialon doped with rare-earth elements are lower than those of ferrite. In order to verify this fact, the sialon doped with rare-earth elements was compared with ferrite containing strontium (Sr), and the results thereof are shown in FIG. 4. Even though the hysteresis behavior of the sialon doped with rare-earth elements is remarkably exhibited in material science, in order to really put them to practical use, the hysteresis behavior of the sialon doped with rare-earth elements is more clearly exhibited, and thus sialons having higher values are required.

Therefore, in the present invention, in order to improve the magnetic properties of sialon doped with rare-earth elements, iron or cobalt was added to the sialon. When iron or cobalt is added to the sialon containing rare-earth elements (for example, α-sialon), doubly-doped α-sialon can be obtained. Here, the ionic radii of trivalent iron cations (Fe³⁺) and trivalent cobalt cations (Co³⁺) can be compared with those of rare-earth ions serving as a stabilizer of α-sialon. However, since metal cations such as iron and cobalt cations cannot act as an effective stabilizer of α-sialon, a large amount of metal cations cannot be added. Therefore, in the present invention, the amount of iron (III) oxide or cobalt (II&III) oxides was adjusted in the range of 10 wt% or less, and then added to single rare-earth elements to synthesize sialon. In this case, the composition of the sialon was set to m = 2 and n = 2. It can be seen that the doped sialon sample containing iron was strongly influenced by a magnetic field.

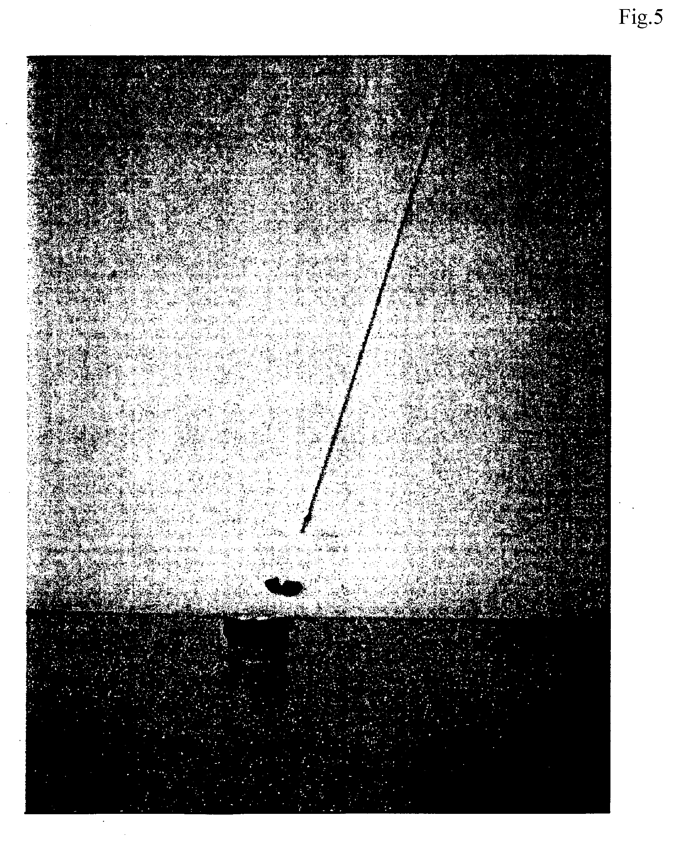

FIG. 5 is a photograph showing the reaction of a sialon sample doped with iron (Fe) and a permanent magnet. As shown in FIG. 5, the sialon sample was strongly influenced by a permanent magnet. However, a sialon sample doped with cobalt (Co) did not show such a behavior.

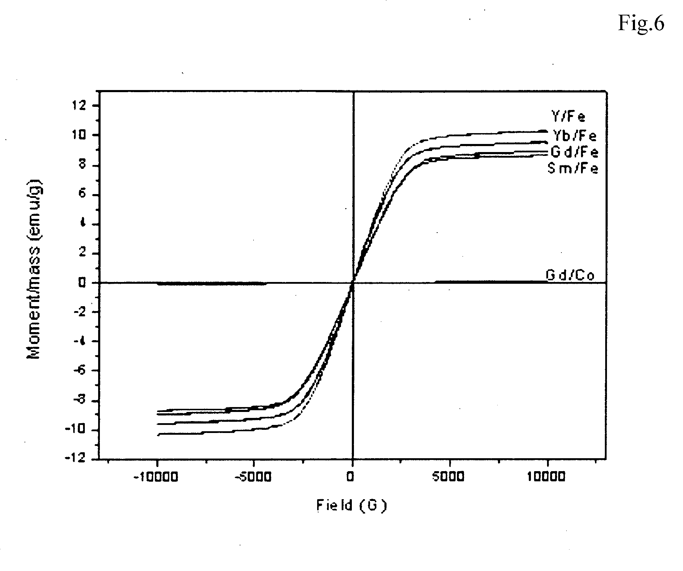

FIG. 6 shows magnetic hysteresis behavior of sialons doped with rare-earth cations and 10 wt% of iron (Fe) based on the total amount of the sialon. In order to compare the doping effect of iron with the doping effect of cobalt, the magnetic hysteresis behavior of a sialon sample doped with 10 wt% of cobalt (Co) based on the total amount of the sialon sample is also shown in FIG. 6. However, as shown in FIG. 6, it can be seen that the doping effect of cobalt for improving the magnetic properties of sialon is slight. The reason for this is presumed that cobalt silicide (CoSi) is a diamagnetic semimetal. As expected, it can be seen that the saturation magnetization values (Ms) of the sialons are increased with increasing amounts of the added iron oxide.

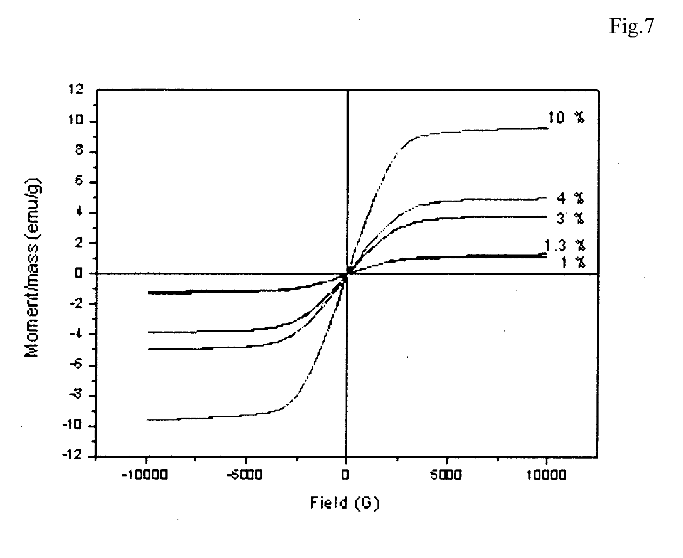

FIG. 7 shows the change in magnetic hysteresis behavior of doubly-doped sialon depending on the change in the amount of iron (Fe). The increase in saturation magnetization value of a sialon sample is attributable to the increase in the amount of magnetic components. That is, the saturation magnetization value (Ms) of sialon reached the maximal value when the amount of the iron oxide added was about 10 wt%. The saturation magnetization value of the sialon doped with 10 wt% of iron was about 10 emu/g, and the coercive field strength of the sialon corresponding to the saturation magnetization value thereof was about 8000 G.

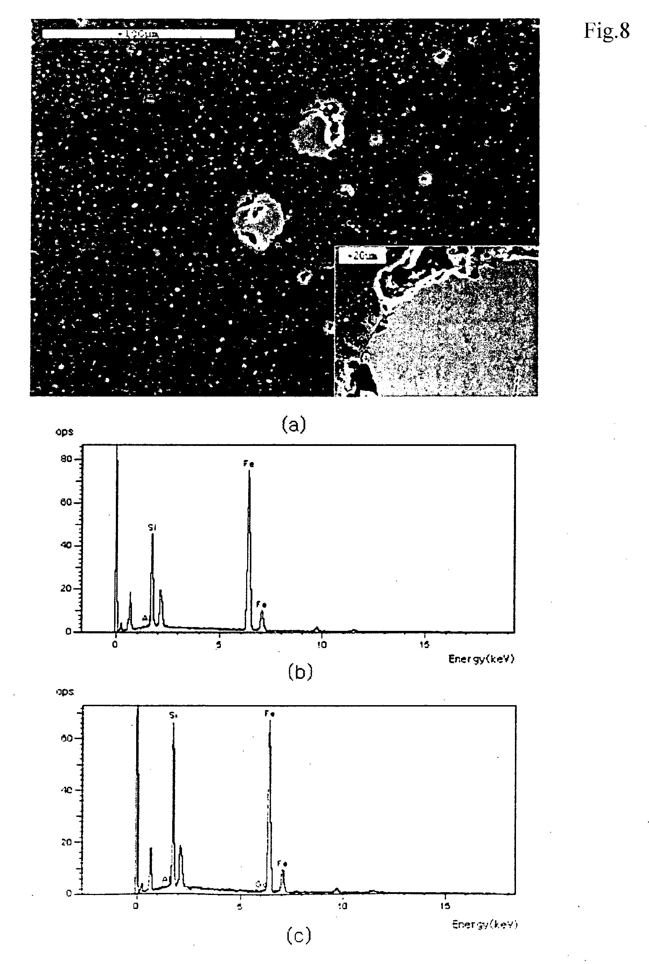

FIG. 8 is a photograph showing a microstructure of the sialon doped with iron, observed using a scanning electron microscope (SEM) provided with an energy dispersive X-ray (EDS) analyzer. As shown in FIG. 8, it can be seen that iron elements existing in the form of silicide are spherical particles having an average particle size of several micrometers.

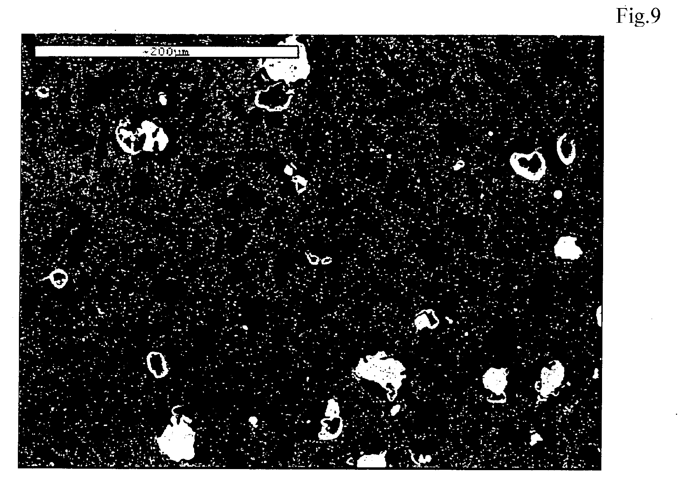

FIG. 9 shows a microstructure of the sialon doped with iron, observed using a scanning electron microscope (SEM) of back scattered electron mode (BSE). As shown in FIG. 9, it was observed that β-sialon includes needle-shaped grains, and is relatively black because rear-earth elements are not formed into a solid solution, and that α-sialon, which is stabilized because rear-earth elements are formed into a solid solution, has bright colors compared to β-sialon, and iron silicide has approximately white color. Therefore, the phases of β-sialon, α-sialon and iron silicide are clearly distinguished from each other. The reason for this is that a BSE image reflects the contrast due to the difference in atomic number.

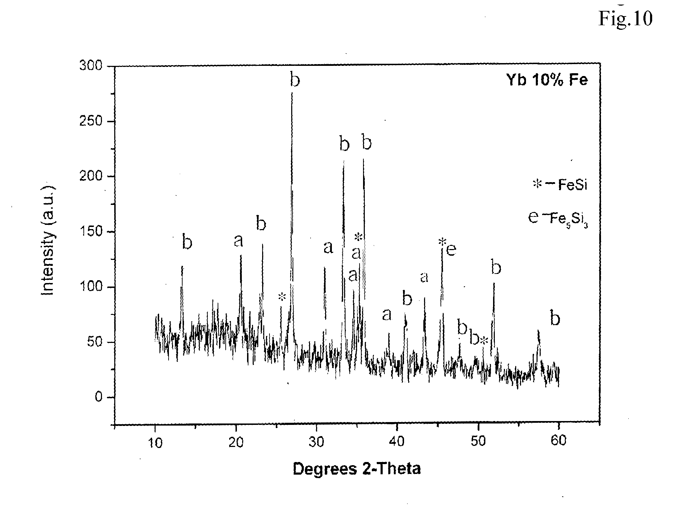

As the result of EDS-analysis of particles, it can be seen that the iron silicide particles were FeSi particles, and, often, Fe₅Si₃ particles. Further, it can be clearly seen that iron (Fe) was not observed in α' particles, and the α' particles include rare-earth elements. FIG. 10 shows the results of XRD-analysis of the sialon manufactured as above. As shown in FIG. 10, α' and β' phases as well as FeSi and Fe₅Si₃ were clearly observed. The iron silicide particles in the sialon contribute greatly to the increase in the saturation magnetization value of the sialon. Judging from this point of view, it is presumed that the contribution of rare-earth cations to the increase in the saturation magnetization value of the sialon is relatively slight. It is known that an iron-silicon system includes five iron silicide phases such as FeSi₂, FeSi, Fe₅Si₃, Fe₂Si and Fe₃Si, and, among them, Fe₅Si₃ and FeSi have magnetic properties. Impurities having the same atomic ration as iron/silicon (Fe/Si) influence the magnetic behavior of iron silicide.

As shown in FIG. 6, it can be seen that the sialon sample doped with iron has high saturation magnetization value, but has relatively low coercive field strength and remnant magnetization value and a relatively narrow hysteresis loop region. The reason for this is that the sialon sample doped with iron exhibits physical properties corresponding to those of soft magnetic materials, and thus the hysteresis loss of the sialon sample is relatively low.

The sialon having the above properties can be applied to high speed transmission transformer cores, electromagnet cores and the like. Further, the sialon sample including iron silicide is characterized in that it has high density and high strength, and this fact can be verified from the report that a sialon-iron silicide composite has high mechanical strength. As a result, the sialon doped with iron can be evaluated as a material having excellent durability as well as magnetic properties. Further, even when a positive electric field is applied and then removed again, the remnant magnetization value of the sialon becomes slight. The reason for this is that the magnetic moment is approximate to the applied electric field. Therefore, when the applied electric field is changed along a sine curve, an output pattern similar to the input pattern is formed without distortion. These characteristics are characteristics which can be very usefully used at the time of signal conversion.

The magnetic properties of a material are greatly influenced by the microstructure of the material. Therefore, the coercive field strength and remnant magnetization value of the material may also be influenced by the microstructure thereof. The parameters influencing domain wall motion include the morphology and distribution of iron silicide particles, the existence of grain boundaries, the residual stress generated by the difference in thermal expansion coefficient between iron silicide particles and sialon crystals, and the like. When the parameters inhibit the domain wall motion, high coercive field strength is induced. For this reason, it is expected that the application fields of the sialon having magnetic properties will be enlarged.

As described above, the present invention is advantageous in that it enables sialon to be used as an electromagnetic material as well as in traditional structural materials.

Further, the present invention is advantageous in that it can enlarge the technical application scope of sialon as an electromagnetic material by adding metals, such as iron, cobalt, etc., or metal oxides thereof as well as rare-earth elements to sialon and thus improving the magnetic properties of the sialon.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of manufacturing sialon having magnetic properties, comprising:
mixing silicon nitride, aluminum nitride, alumina and rare-earth oxide to form a mixture; and
sintering the mixture in a nitrogen atmosphere,
wherein the resulting sialon has a saturation magnetization ranging from 0.15 to 0.24 emu/g.

2. The method of manufacturing sialon having magnetic properties according to claim 1, wherein the sintering of the mixture is performed at a temperature of 1700 ∼ 1900°C using a gas-pressure sintering process.

3. The method of manufacturing sialon having magnetic properties according to claim 1, further comprising:
adding iron (Fe) oxide to the mixture,
wherein the saturation magnetization of the sialon is increased in proportion to an amount of the iron (Fe) oxide added.

4. The method of manufacturing sialon having magnetic properties according to claim 3, wherein the sintering of the mixture including the iron (Fe) oxide is performed at a temperature of 1500 ∼ 1700°C using a gas-pressure sintering process.

5. The method of manufacturing sialon having magnetic properties according to claim 3, wherein the mixture including the iron (Fe) oxide is sintered to form iron silicide, and the iron silicide has magnetic properties.

6. The method of manufacturing sialon having magnetic properties according to claim 5, wherein the iron silicide formed by sintering the mixture including the iron (Fe) oxide is FeSi or Fe₅Si₃.

7. The method of manufacturing sialon having magnetic properties according to claim 1 or 3, wherein the rare-earth oxide is at least one selected from among yttrium (Y) oxide, ytterbium (Yb) oxide, samarium (Sm) oxide, gadolinium (Gd) oxide and erbium (Er) oxide, and an amount of the rare-earth oxide is 10 ∼ 20 wt% based on total amount of the mixture.

8. Sialon having magnetic properties, manufactured by adding a rare-earth oxide or a rare-earth element thereto, wherein the sialon has a saturation magnetization value ranging from 0.15 to 0.24 emu/g.

9. Sialon having magnetic properties, manufactured by adding a rare-earth oxide or a rare-earth element and iron (Fe) or iron (Fe) oxide, wherein a saturation magnetization value of the sialon is increased depending on an amount of the iron (Fe) or iron (Fe) oxide added.
